# EUROPEAN PATENT SPECIFICATION

(11) **EP 2 176 177 B1**
(45) Date of publication and mention of the grant of the patent: **21.12.2011**
(21) Application number: 08774641.8
(22) Date of filing: 02.07.2008
(51) Int. Cl.: C02F 11/00, C02F 9/00

(54) **METHOD OF RECOVERING PHOSPHATE FROM BIOMASS**
VERFAHREN ZUR GEWINNUNG VON PHOSPHAT AUS BIOMASSE
PROCÉDÉ DESTINÉ À RÉCUPÉRER DU PHOSPHATE À PARTIR D'UNE BIOMASSE

(30) Priority: 05.07.2007 DK 200700994
(43) Date of publication of application: 21.04.2010
(73) Proprietor: Seaborne EPM AG, 24811 Owschlag (DE)
(72) Inventor: VESTERAGER, Ole, 24811 Owschlag (DE)
(74) Representative: Bender, Mikkel
(86) International application number: PCT/EP2008/058507
(87) International publication number: WO 2009/004027

(56) References cited:
- WO-A-96/21625
- DE-A1- 4 414 261
- US-A- 5 720 882

## Description

The present invention relates to a method of recovering phosphate from biomass such as animal manure, waste slurries, organically loaded waste water etc.

Until now it has been a problem to remove sufficient phosphate from the biomass products fed to the process and to transform the phosphate removed from the biomass products in order to gain both a valuable phosphate product and one or more waste products which could be either released to the surroundings without causing any environmentally problems or be reused in other processes.

US 5.720.882 discloses one method for recovering phosphorous and at least one metal including iron from waste water while discharging heavy metals. This method comprises a liquid-liquid extraction which takes place after removal of the organic material and before the precipitation of heavy metals, this step is rather expensive and more commonly used in the pharmaceutical industry.

EP 558.568 describes a process where biomass in the form of domestic animal manure, slurry, organically loaded effluent waste water or a mixture thereof is being treated in order to separate the biomass in to two fractions, a small fraction which may be utilized as a fertilizer and a large fraction which may directly be discharged to a recipient. The process comprises the following steps:
- the fresh biomass is received in a tank 1,
- a flocculation agent is added and the fiber fraction is discharged to a tank 9 and the liquid fraction is transferred to tank 2,
-- the pH of the fiber fraction in tank 9 is adjusted,
-- bacteria and enzymes is added to the fiber fraction to decompose solid material e.g. lignocellulose and liberate N, P and K bound in the solid material,

- the pretreated fiber fraction of tank 9 is mixed with the liquid biomass fraction from tank 2 in tank 3,
- urea complex, ammonium and phosphate is precipitated by adding metal ions (Mg⁺², Ca⁺², Ba+², Be⁺², Co⁺², Zn⁺², Mn⁺², Mn⁺³, Fe⁺², Fe⁺³, Al⁺³, Cu⁺¹, Cu⁺², B⁺³, Si etc) and adjusting the pH value (pH = 4-10), which pH value is chosen will depend on which fertilizer type is wanted,
- the precipitates are removed in a filter 4 and the liquid phase is transferred to a tank 6
- in tank 6 sulfate and phosphorus ions are precipitated as double salts by adjusting pH to 7,0-7,5 and adding metal ions (Mg⁺², Ca⁺², Ba⁺², Be⁺², Co⁺², Zn⁺², Mn⁺², Mn⁺³, Fe⁺², Fe⁺³, Al⁺³, Cu⁺¹, Cu⁺², B⁺³, Si etc),
- precipitates are removed in a filter 7 and liquid phase transferred to a tank 8,
- the substances from filter 4 and filter 7 might be mixed to form an organic fertilizer containing N, P and K,
- the liquid phase in tank 8 is water which is environmentally acceptable. According to this method the content of NH₃, P₂O₅ and K₂O have been reduced as follows:

| | NH₃ (kg/m³) | P₂O₅ (kg/m³) | K₂O (kg/m³) |
|---|---|---|---|
| Slurry from animal husbandry | 4,25 | 1,55 | 5,83 |
| Outflow from tank 8 | 0,46 | 0,17 | 0,48 |
| Remaining amount | 10,8% | 11,0% | 8,2% |

The method according to the present invention makes it possible to regain more than 90% of the phosphates of the incoming waste thereby reducing the content of phosphate being redirected into the environment, and at the same time the content of NH₃ and K₂O will be reduced to at least the same level as in the process of EP-B1-558.568, and further the amount of heavy metals in the waste products from the process will be reduced.

### Detailed description of the invention

The invention will in the following be explained in further detail with reference to the accompanying drawings, where
- figure 1 illustrates a flow chart for a method according to the invention,
- figure 2 illustrates a process for removal of NH₃/NH₄ from the process,
- figure 3 illustrates a process for removal of heavy metals from the process,
- figure 3a shows an embodiment of the extraction section comprising two separate tanks,
- figure 3b shows an embodiment of the reaction container comprising two tanks,
- figure 4 illustrates a process for precipitation of phosphates,
- figure 5 shows pH and used peroxide for three experiments 1, 2 and 14,
- figure 6 shows the release of Cu and Zn to the liquid phase during respectively the first and the second extraction for the three experiments 1, 2 and 14,
- figure 7 shows the amount of PO₄ released to the liquid phase after extraction and the total amount of Cu, Zn and PO₄ left in the remaining dry matter for the three experiments 1, 2 and 14,
- figure 8 shows the amounts of precipitated CuS and ZnS after addition of sulfide at different pH values for the three experiments 1, 2 and 14,
- figure 9 shows the amounts of phosphate compounds being precipitated after the extraction at different pH values for the three experiments 1, 2 and 14,
- figure 10 shows the pH values and amount of added hydrogen peroxide for a first and a second extraction performed in tank 11 a and 11 b for the three experiments 8, 12 and 14,
- figure 11 shows the release of Cu and Zn to the liquid phase during respectively the first and the second extraction for the three experiments 8, 12 and 14,
- figure 12 shows the amount of PO₄ released to the liquid phase after extraction and the total amount of Cu, Zn and PO₄ left in the remaining dry matter (TS),
- figure 13 shows the amounts of precipitated Cu and Zn-sulfide in tank 13b at different pH values together with the precipitated amount of phosphate,
- figure 13a shows the amounts of precipitated Cu, Zn, Ca, PO₄ and NH₄ in tank 13b at different pH values together with the precipitated amount of phosphate,
- figure 14 shows the amounts of phosphate precipitated in tank 17 at different pH values,
- figure 14a shows the amounts of precipitated Cu, Zn, Ca, PO₄ and NH₄ in tank 13b at different pH values together with the precipitated amount of phosphate,
- figure 15 shows the pH values and amount of added hydrogen peroxide for a first and a second extraction performed in tank 11 a and 11 b for the three experiments 1x, 2x and 3,
- figure 16-19 shows the release of the heavy metals Cu, Zn, Ni, Pb, Cr, Cd and Hg and of phosphate to the liquid phase during respectively the first and the second extraction.

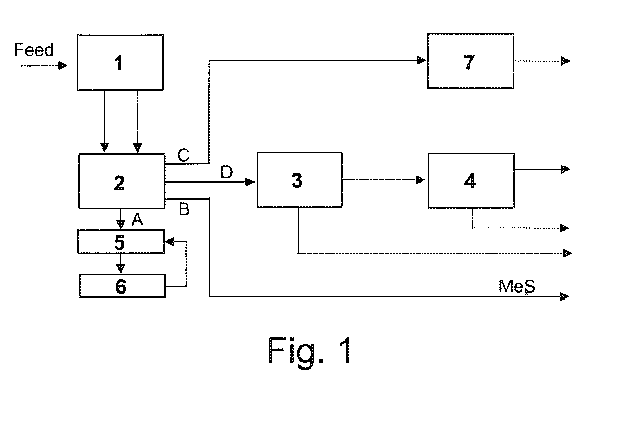

In the embodiment of the process illustrated in figure 1 the feedstock enters a fermenter 1. The feed can be any kind of organic waste or combinations of different organic waste, such as manure, waste from food industries, sewage sludge from waste water treatment, refuse from animal or vegetable production etc. or mixtures of different kind of waste.

In the fermenter 1 the feed is subjected to fermentation, fermentation breaks down organic matter under exclusion of oxygen. In a first phase a hydrolysation process takes place where facultatively anaerobic bacteria start the hydrolysation and disintegration of volatile organic substances. Complex organic compounds are split under production of organic acids, CO₂, H₂S and alcohol. Nitrates and sulfates are reduced and the pH value is lowered. In second phase methane bacteria digest the products of the metabolism of the first phase. Final products of the process are methane gas, CO₂, H₂S and mineral salts. Due to the reducing atmosphere inside the fermenter and the production of ammonium out of the anaerobic degradation of proteins, the pH value is rising continuously, and the pH value of the fermented substrate normally ranges from 7.5 to 8.5. If a fermenter is not used with the process it might be necessary to provide another source of sulfide.

Two streams leave the fermenter 1, a stream of liquid/solid mixture which is led to an area 2, and a stream of biogas which is either removed from the process or is returned to the process in area 2.

In area 2 heavy metals are removed from the slurry and four streams leave the area 2:
**A**. remaining solids which normally comprises around 75-85% material of organic origin which makes the material appropriate for being burned, e.g. having an ash content of 15-25 %,
**B**. heavy metals normally precipitated as sulfides,
**C**. desulfurised biogas, and
**D**. process liquid

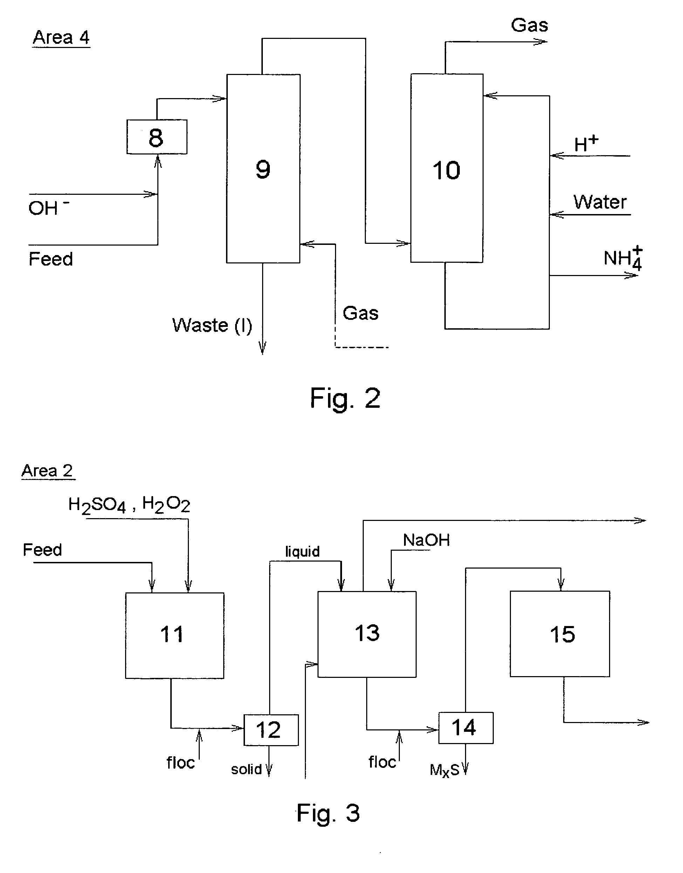

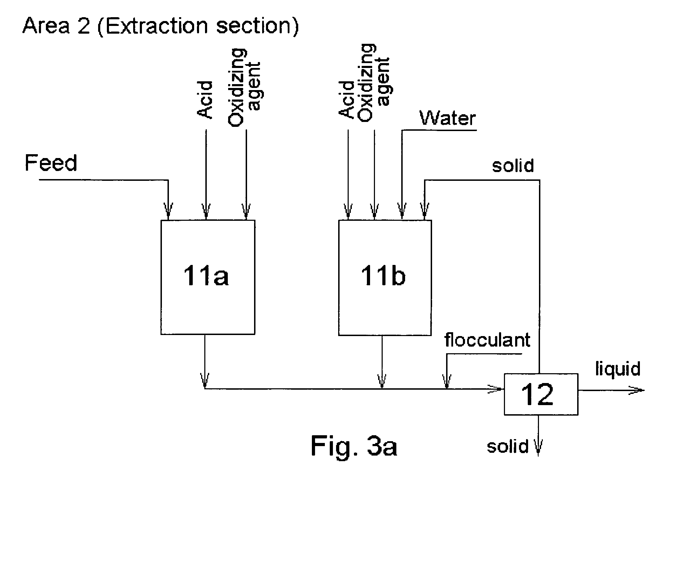

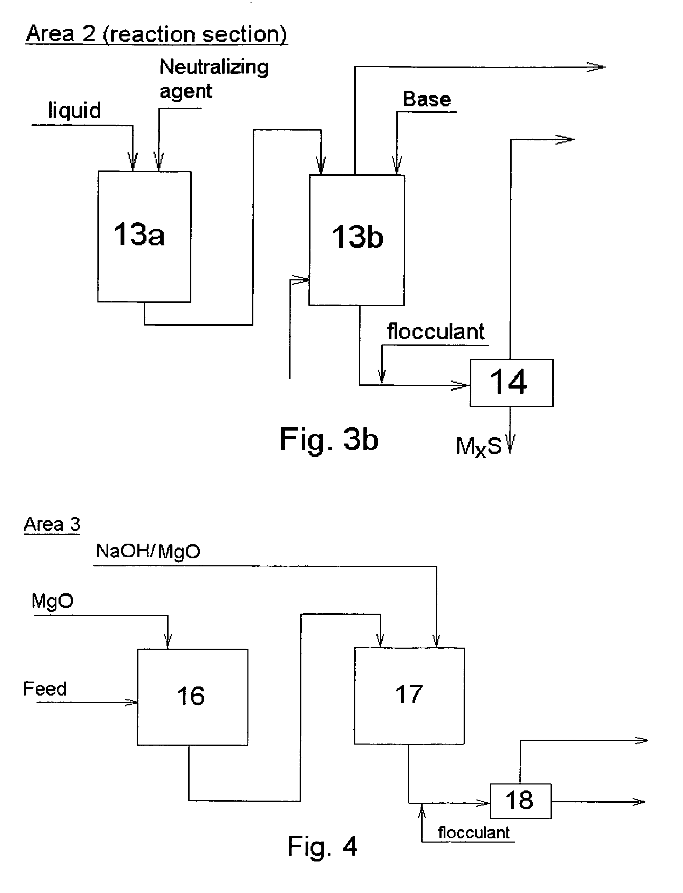

An example of the processes of area 2 is illustrated in details in connection with the description of figure 3.

When heavy metals have been removed from the process liquid in area 2, the liquid enters an area 3 where phosphates and ammonia in ratio approximately 1: 1 are to be removed from the liquid. Two streams leave the area 3, a solid mass comprising precipitated phosphate and phosphate with ammonia which could be used directly as a fertilizer or as a component for production of a fertilizer, and a liquid with remaining nitrogen is lead to area 4.

The area 4 represents removal of the residual NH₃/NH₄ from the liquid and an example of NH₃/NH₄-removal is illustrated in details in connection with the description of figure 2. Two streams leave the area 4. The first stream comprises a liquid having a content of nitrogen which is high enough to characterise the liquid as a liquid N-fertilizer and the second stream comprises a liquid having such a small amount of fertilizers and heavy metals that it would be possible to send the liquid directly to a recipient.

Figure 2 shows an example of a process for removal of NH₃/NH₄ from the process mixture. First the pH value of the process fluid is raised to preferably 8.5-10.5, for example by adding a solution of NaOH to the fluid. Then the temperature of the fluid is raised to above 50°C in a heat exchanger 8. The warm, alkaline fluid enters a desorption unit 9 at one end, and passes over a large surface which surface, together with a counter current gas flow, allows for transferal of NH₃ from the liquid phase to the gas phase. The counter currently flowing gas has a very low or no content of NH₃ and is entering into the desorption unit 9 at the opposite end of where the fluid enters. When the gas has passed through the desorption unit 9, the gas has a certain content of NH₃, the exact content of NH₃ depend on the content of NH₃ in the process fluid. The waste fluid having a much reduced content of N leaves the desorption unit 9.

The NH₃-containing gas from the desorption unit 9 is send to an absorption unit 10 in which unit the NH₃-containing gas is washed in counter current with a liquid acid solution, preferably H₂SO₄. During the washing process the NH₃ passes from the gas phase to the liquid by forming ammonium when reacting with the acid. The acidic liquid is recirculating through the absorption unit 10, and during the recirculation a fraction of the ammonium solution is removed while additional water and acid is supplied in order to reach appropriate absorption conditions. When sulfuric acid is used, it will be possible to use the resulting (NH₄)₂SO₄ which is removed from the absorption unit 10 as a fertilizer component. The gas which is leaving the unit 10 has a very low content of NH₃ and can be recirculated to unit 9.

When the process fluid passes into the area 2 for removal of heavy metals it first enters an extraction section 11 (Fig.3) which can comprise one or more extraction steps, in which the pH value is lowered to ≤ 3.5, preferably by adding sulfuric acid. During lowering of the pH value a part of the solid material remaining in the process fluid is broken down and heavy metal ions and phosphate is released from the solids. Together with or after addition of the sulfuric acid, hydrogen peroxide or another oxidizing agent can be added in order to increase release of heavy metals and phosphates to the liquid phase. After having been subjected to stirring for a sufficient time remaining solids are separated from the liquid in a separator unit 12 e.g. in a centrifuge or filter. In order to improve the separation a flocculant can be added before the separation process. Normally the solids separated during this process step consist of 75-85 % organic material which makes it suitable for combustion.

Fig. 3a shows an embodiment of the extraction section 11 comprising two separate steps 11a and 11b. In this embodiment of the extraction section 11 a first extraction is executed in step 11a, in the first extraction step an acid is added, preferably an inorganic acid such as H₂SO₄, and pH adjusted to ≤ 3.5, further an oxidizing agent preferably H₂O₂ is added to the solution. After adding the reagents to the mixture, the mixture is agitated for a period. After the first extraction step the mixture is transferred to a separator unit 12 where it is separated into a liquid fraction which is transferred to step 13 and a solid fraction which is transferred to step 11 b. A flocculation agent can advantageously be added to the mixture before the mixture enters the separator unit 12. A second extraction is executed in step 11 b by adding an inorganic acid such as H₂SO₄ adjusting pH to ≤ 3.5 (preferably adjusting pH to ≤ 1.1), an oxidizing agent, preferably H₂O₂, and water, the resulting solution is agitated for a period. After the second extraction in step 11 b the mixture is again transferred to the separator unit 12 where it is separated into a liquid fraction which is transferred to step 13 and a solid fraction which is removed from the process and e.g. burned.

The liquid from the separator unit 12 enters a reaction step 13 (fig. 3) where a main part of the heavy metals contained in the liquid will be precipitated. In the reaction step 13 the pH value is raised to between 3.5 and 7.5 e.g. by adding NaOH. Then sulfide is added to react with the heavy metals forming sparingly soluble compounds in form of metal sulfides MₓS. The precipitation of the heavy metals can be performed with other agents forming other sparingly soluble compounds than metal sulfide in which case the conditions for the reaction such as the pH value should be adjusted to the new agent.

Preferably the sulfide in the biogas removed from the fermenter can be added to the reaction step 13 and used for precipitation of heavy metals. The biogas preferably enters the liquid in step 13 through a nozzle in the lower part of the container in which the reaction takes place and as the biogas passes through the process liquid the H₂S in the biogas reacts with the heavy metals contained in the process liquid forming sparingly soluble metal sulfides and at the same time cleaning the biogas of the aggressive and unwanted H₂S.

Fig. 3b shows reaction step 13 comprising two steps 13a and 13b. The process liquid is added to the first step 13a together with a precipitation forming agent which does not raise pH, preferably oxalic acid, and after having been agitated for a suitable time, the process liquid is transferred to the second step 13b. In the second step pH is raised to between 3 and 7.5 by adding a base, e.g. NaOH., and after raising pH sulfide is added to the step 13b, e.g. at least a part of the sulfide is added continuously to the step 13b in the form of biogas.

Specially in the treatment of sewage sludge it will be advantageous to add a precipitation forming agent to reaction step 13a in order to bind ions such as e.g. aluminium, calcium and ferric, that have the affinity for forming insoluble compounds with phosphate at pH>3. In order to obtain satisfying results in the heavy metal precipitation step taking place in step 13b it is necessary to increase the pH-value >3 and the higher the pH-value the better the precipitation results for the heavy metals. Fixing calcium in the compound with the precipitation forming agent and thereby removing it from the process liquid together with the heavy metals will have a positive effect in the further treatment. The presence of calcium can cause problems in the successive process of NH₃-/NH₄-desorption, where the pH value has to be increased. Calcium can form solid deposits in the stripping tower and can block the process stream. A precipitation forming agent can be a carboxylic acid with one or more -COOH groups, preferably citric or oxalic acid which precipitates e.g. Al³⁺, Fe³⁺, Fe²⁺, Ca²⁺, and assures that a significant fraction of the Al³⁺, Fe³⁺, Fe²⁺, Ca²⁺ can be removed.

After leaving the container 13 the precipitates are removed from the liquid stream into a separator unit 14 e.g. in a centrifuge or filter. The liquid thereafter enters a storage container 15 where it remains until it can be transferred to the final area 3.

The feed stock entering area 3 from the storage container 15 is low in heavy metals and has a pH value defined by the previous process step. The filtrate (feed) enters a reaction step 16, it is registered how many mol P that are present in the liquid in the step 16, where after a corresponding number of mol metal ions M²⁺, preferably MgO, is added to the liquid. Then the filtrate is transferred to a second reaction step 17 and in this step the pH value is raised to between 8.5 and 10 by adding NaOH or another appropriate base in order to induce a precipitation of the formed phosphate compounds. The precipitated phosphate compounds mainly comprises of NH₄MgPO₄ and HMgPO₄ in the case that MgO was added as metal ions M²⁺ to the liquid. After the second reaction step 17 a flocculent might be added to the mixture in order to increase separation where after the mixture is transferred to a separator unit 18, e.g. a centrifuge or a filter. The separator unit 18 separates the mixture in to a solid rich in phosphate and a liquid with a very low content of pollutants.

According to the process defined in the claims the products of the process comprise a phosphate-rich compound having a low content of heavy metals and being well-suited as a fertilizer, a water fraction which is clean enough to be let directly into the environment, a gas fraction which can comprise desulfurised biogas and a solid organic fraction which can be either burned or used as fertilizer. Further the process will produce a waste product in the form of a small amount of heavy metals in a solid fraction, normally in the form of sulfides.

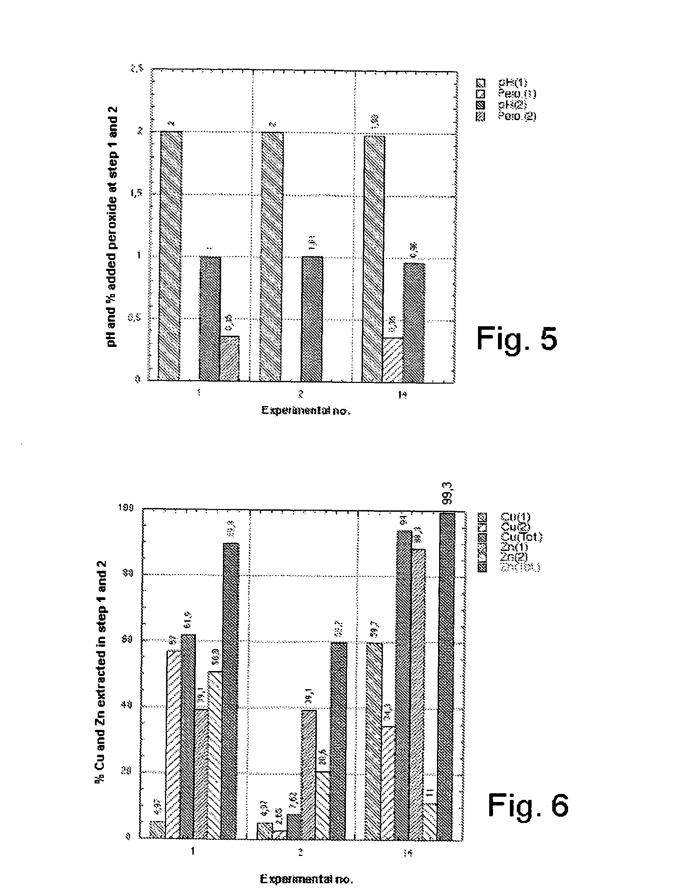

Figure 5-9 shows measurements of process conditions and contents of components measured at variable positions in the process for three experiments 1, 2 and 14.

The raw material for all three processes is slurry from animal husbandry. The content of dry matter in the mixture before entering the first extraction step was between 3-8 %.

Figure 5 shows the pH values and amount of added hydrogen peroxide for a first and a second extraction performed in tank 11 a and 11 b. The four columns for each experiment indicate from the left: (1) pH of first extraction, (2) vol% hydrogen peroxide added at the first extraction, (3) pH of second extraction, (4) vol% hydrogen peroxide added at the second extraction.

The values for pH and the amount of peroxide added (in volume %) will normally vary as a function of the dry matter content of the biomass, the higher the content of dry matter the more peroxide is added and the lower the pH but as "biomass" is a rather undetermined composition a precise optimum for the values of pH and peroxide has to be determined by experiments for the actual biomass. Also the addition of peroxide during the extraction process should be adjusted to the amount of oxidisable compounds in the biomass as to much peroxide added during extraction will result in an increased amount of sulfide being consumed during the stage of precipitating heavy metals.

Fig. 6 shows the release of heavy metals to the liquid phase during respectively the first and the second extraction. The six columns for each experiment 1, 2 and 14 indicates respectively from the left: (1) the content in % of Cu present in liquid phase after first extraction, (2) the content in % of Cu present in liquid phase after second extraction, (3) total amount of Cu released to the liquid phase, (4) the content in % of Zn present in liquid phase after first extraction, (5) the content in % of Zn present in liquid phase after second extraction, (6) total amount of Zn released to the liquid phase.

**Table 1: Dissolved Cu and Zn (fig. 6)**

| **Experiment no.** | **1** | **2** | **14** |
|---|---|---|---|
| Total release of Cu (%) | 61,9 | 7,62 | **94,0** |
| Total release of Zn (%) | 89,8 | 59,7 | **99,3** |

The results show that when extracting heavy metals from the present biomass it is preferred to add peroxide to a first extraction step as this increase the total amount of Cu/Zn released to the liquid phase and reduce the amount of heavy metals remaining in the organic dry matter.

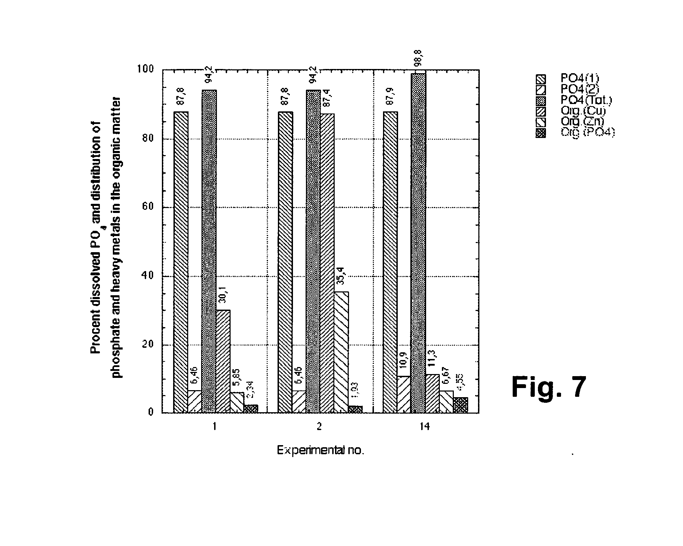

Fig. 7 shows the amount of PO₄ released to the liquid phase after extraction and the total amount of Cu, Zn and PO₄ left in the remaining organic solids. The six columns for each experiment 1, 2 and 14 indicates respectively from the left: (1) the content in % of PO₄ present in liquid phase after first extraction, (2) the content in % of PO₄ present in liquid phase after second extraction, (3) total amount of PO₄ released to the liquid phase, (4) %Cu present in the organic solids after second extraction, (5) %Zn present in dry matter after second extraction, (6) %PO₄ present in the organic solids after second extraction.

**Table 2: Dissolved PO₄, PO₄,Cu,Zn remaining in the organic solids (fig. 7)**

| **Experiment no.** | **1** | **2** | **14** |
|---|---|---|---|
| Total release of PO₄ (%) | 94,2 | 94,2 | 98,8 |
| Zn (%) in dry matter | **5,85** | 35,4 | **6,67** |
| Cu (%) in dry matter | 30,1 | 87,4 | **11,3** |
| PO₄ (%) in dry matter | 2,34 | 1,93 | 4,55 |

The values for Cu and Zn given in table 2 are the percentage of Cu and Zn in the organic solids in relation to the total amounts of respectively Cu and Zn in the feed.

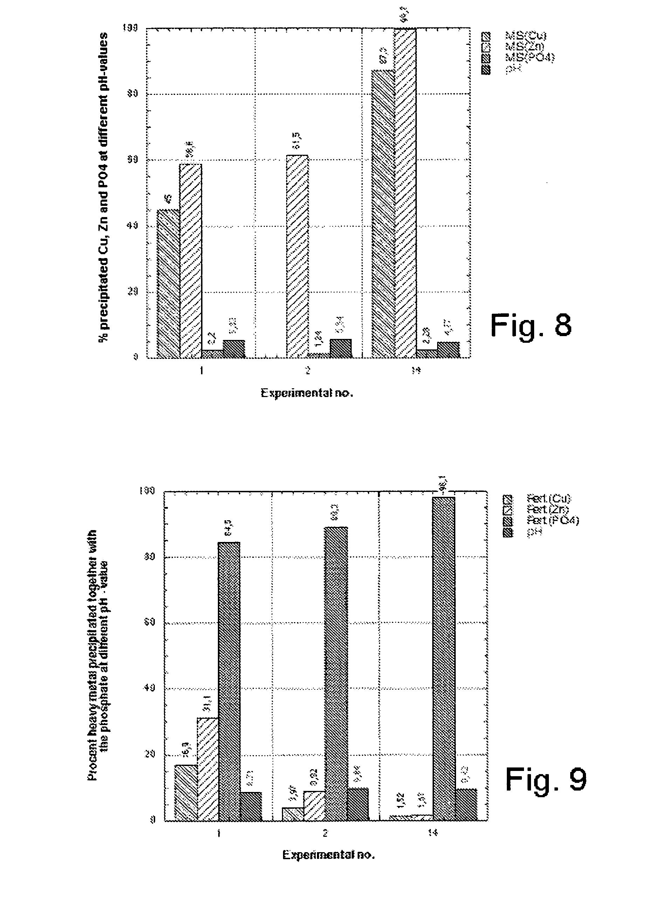

The extraction of phosphate is less dependent on the presence of peroxide in the extraction steps. The amount of extracted phosphate dependents more on the pH value and on which acid is used for the extraction. The amounts of Cu and Zn in the organic solids should preferably be as small as possible as the dry matter removed from the process at this stage could e.g. be spread on fields and used for enrichment of soil or e.g. be burned in which case it is desirable to produce an ash with a low content of heavy metals. Figure 8 shows the amounts of precipitated Cu and Zn-sulfide in tank 13b at different pH values. The four columns for each experiment indicate from the left: (1) % precipitated CuS in relation to the total amount of Cu in the feed, (2) % precipitated ZnS in relation to the total amount of Zn in the feed, (3) % precipitated PO₄ in relation to the total amount of PO₄ in the feed, (4) pH value at which precipitation took place.

**Table 3: Precipitation of Cu, Zn sulfides and phosphates (fig. 8)**

| **Experiment no.** | **1** | **2** | **14** |
|---|---|---|---|
| % prep. Cu | 45 | n.d. | 87,3 |
| % prep. Zn | 58,8 | 61,5 | 99,7 |
| % prep. PO₄ | 2,2 | 1,24 | 2,28 |
| pH | 5,33 | 5,54 | 4,77 |
| Addition of oxalic acid (Yes/No) | Y | Y | Y |

It is an advantage that the amount of precipitated metal in this process step is as large as possible while the amount of precipitated phosphate is as small as possible as the intention is to separate the heavy metals from the phosphate.

If aluminum is present in the extract it is an advantage for the separation of the heavy metals from phosphate when a precipitation forming agent is added to tank 13a in order to remove or reduce the content of e.g. Al³⁺, Fe³⁺, Fe²⁺ and Ca²⁺ in the solution. Such a precipitation forming agent can e.g. be a carboxylic acid with one or more -COOH-groups, preferably citric acid, oxalic acid or acetic acid; complex binders such as EDTA, NTA, phosphonates etc. can also be used at this stage but they can complicate the separation between fractions later in the process.

Figure 9 shows the amounts of phosphate compounds precipitated in tank 17 at different pH values.

**Table 4: Precipitation of Cu, Zn sulfides and phosphates (fig. 9)**

| **Experiment no.** | **1** | **2** | **14** |
|---|---|---|---|
| % prep. Cu | 16,9 | 3,97 | 1,52 |
| % prep. Zn | 31,1 | 8,92 | 1,67 |
| % prep. PO₄ | 84,5 | 89,3 | 98,1 |
| pH | 8,71 | 9,84 | 9,42 |
| Addition of oxalic acid (Yes/No) | Y | Y | Y |

At this stage it is desirable that as much PO₄ as possible is precipitated and as little as possible of the heavy metals Cu and Zn are precipitated. It is possible to increase the separation, i.e. increase the amount of P04 and decrease the amount of heavy metals, in the phosphate product by increasing the pH value.

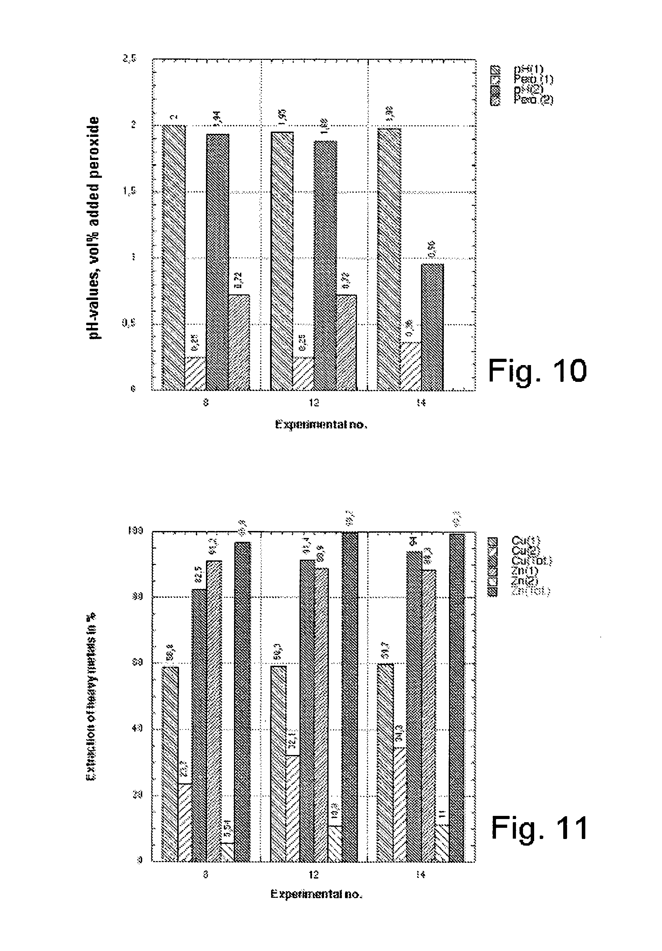

Figure 10 shows the pH values and amount of added hydrogen peroxide for a first and a second extraction performed in tank 11 a and 11 b for the three experiments 8, 12 and 14. The four columns for each experiment indicate from the left: (1) pH of first extraction, (2) vol% hydrogen peroxide added at the first extraction, (3) pH of the second extraction, (4) vol% hydrogen peroxide added at second extraction. These three experiments have all had hydrogen peroxide added to the first extraction step. Experiment 8 and 12 had 0.25 vol% added and experiment 14 had 0.36 vol% added. In the second extraction step experiment 8 and 12 had 0.72 vol% and in experiment 14 no hydrogen peroxide were added.

Fig. 11 shows the release of Cu and Zn to the liquid phase during respectively the first and the second extraction. The six columns for each experiment 8, 12 and 14 indicates respectively from the left: (1) the content of Cu present in liquid phase after first extraction in % of total amount of Cu in the feed, (2) the content of Cu present in liquid phase after second extraction in % of total amount of Cu in the feed, (3) total amount of Cu released to the liquid phase in % of total amount of Cu in the feed, (4) the content of Zn present in liquid phase after first extraction in % of total amount of Zn in the feed, (5) the content of Zn present in liquid phase after second extraction in % of total amount of Zn present in the feed, (6) total amount of Zn released to the liquid phase.

**Table 5: Dissolved Cu and Zn (fig. 11)**

| **Experiment no.** | **8** | **12** | **14** |
|---|---|---|---|
| Total release of Cu (%) | 82,5 | 91,4 | **94** |
| Total release of Zn (%) | 96,8 | 99,7 | **99,3** |

The results show that when extracting heavy metals from the present biomass it is possible to optimize the amount of added peroxide to the first extraction step thereby increasing the total amount of Cu/Zn released to the liquid phase and reducing the amount of Cu/Zn remaining in the organic solids.

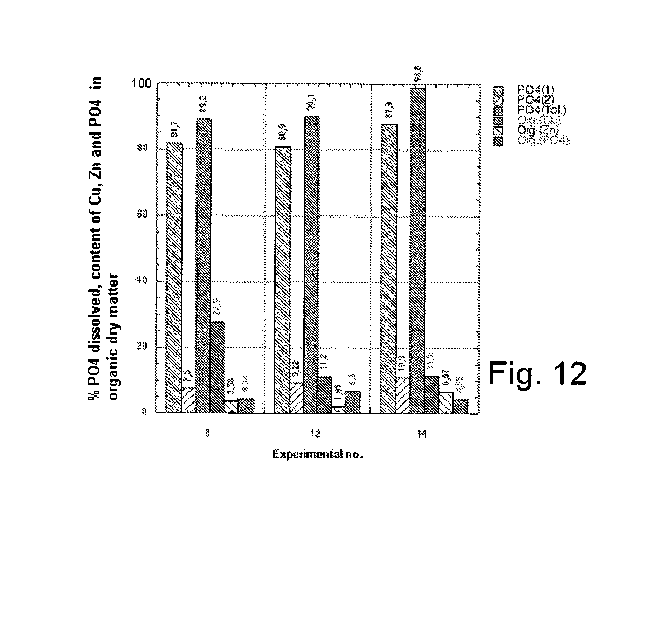

Fig. 12 shows the amount of PO₄ released to the liquid phase after extraction and the total amount of Cu, Zn and PO₄ left in the remaining organic solids. The six columns for each experiment 1, 2 and 14 indicates respectively from the left: (1) the content in % of PO₄ present in liquid phase after first extraction in % of the total amount of P04 in the feed, (2) the content in % of PO₄ present in liquid phase after second extraction in % of the total amount of P04 in the feed, (3) total amount of PO₄ released to the liquid phase in % of the total amount of P04 in the feed, (4) %Cu present in the organic solids after second extraction in relation to the total amount of Cu in the feed, (5) %Zn present in the organic solids after second extraction in relation to the total amount of Zn in the feed, (6) %PO₄ present in the organic solids after second extraction in relation to the total amount of PO₄ in the feed.

**Table 6: Dissolved PO₄, PO₄,Cu,Zn remaining in the organic solids (fig. 12)**

| **Experiment no.** | **8** | **12** | **14** |
|---|---|---|---|
| Total release of PO₄ (%) | 89,2 | 90,1 | 98,8 |
| Zn (%) in dry matter | **3,58** | 1,85 | **6,67** |
| Cu (%) in dry matter | 27,9 | 11,2 | 11,3 |
| PO₄ (%) in dry matter | 4,34 | 6,6 | 4,55 |

The values for Cu and Zn given in Table 6 are the percentage of Cu and Zn in organic solids in relation to the total amounts of respectively Cu and Zn in the feed.

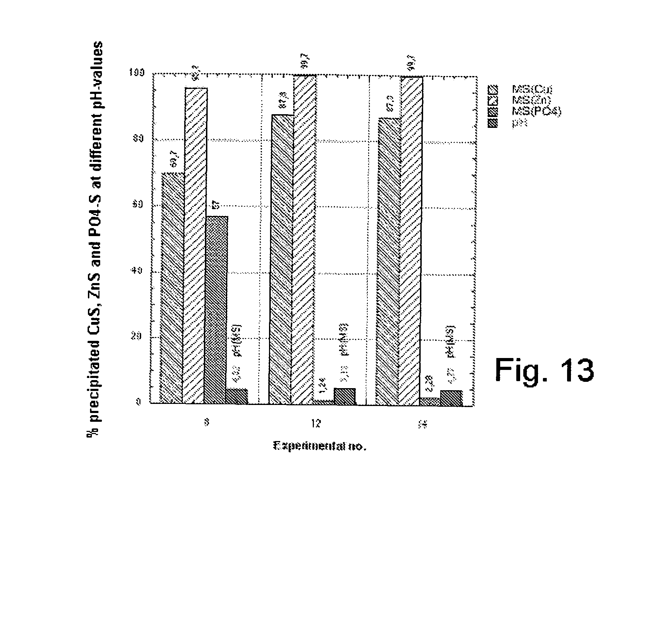

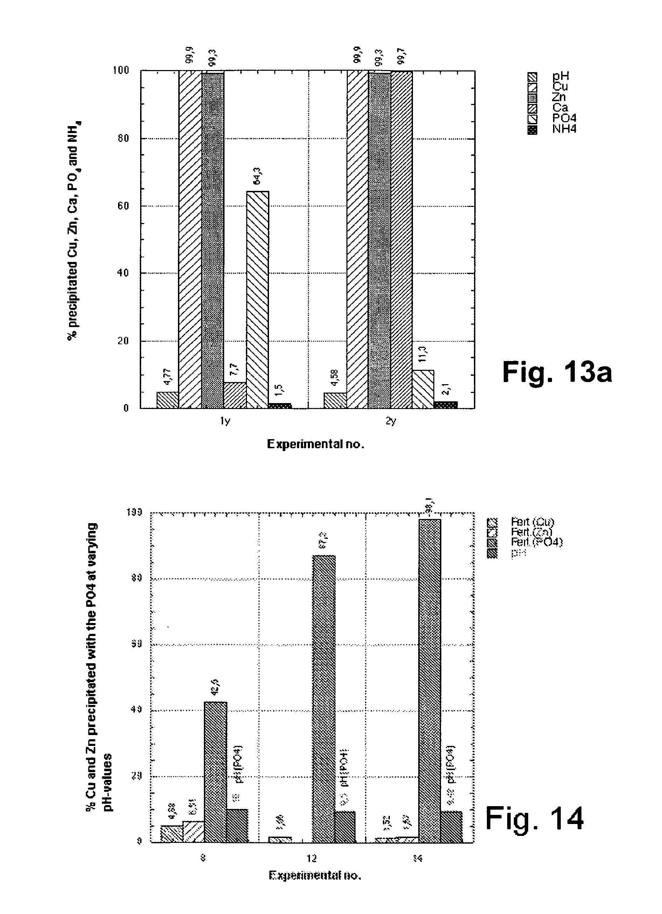

Figure 13 shows the amounts of precipitated Cu and Zn-sulfide in tank 13b at different pH values together with the unwanted precipitated amount of phosphate. In experiment 12 and 14 there is added oxalic acid to the tank 13a in in order to occupy e.g. Al Ca and Fe ions and prevent preferably aluminium from forming complex insoluble compounds with the phosphate. The four columns for each experiment indicate from the left: (1) % precipitated Cu in relation to the total amount of Cu in the feed, (2) % precipitated Zn in relation to the total amount of Zn in the feed, (3) % precipitated PO₄ in relation to the total amount of PO₄ in the feed, (4) pH value at which precipitation took place.

**Table 7: Precipitation of Cu, Zn sulfides and phosphates (fig. 13)**

| **Experiment no.** | **8** | **12** | **14** |
|---|---|---|---|
| % prep. Cu | 69,7 | 87,8 | 87,3 |
| % prep. Zn | 95,7 | 99,7 | 99,7 |
| % prep. PO₄ | **57** | 1,24 | 2,28 |
| pH | 5,33 | 5,54 | 4,77 |
| Addition of oxalic acid (Yes/No) | N | Y | Y |

As it is an advantage that the amount of precipitated metal in this process step is as large as possible while the amount of precipitated phosphate is as small as possible the result of experiment 8 is not good while the results of experiment 12 and 14 - especially the result of experiment 12 - are very good.

The reduced amount of precipitated PO₄ in experiment 12 and 14 where oxalic acid is added is confirmed by the results of additional experiments 1 y and 2y illustrated in figure 13a. In experiment 2y oxalic acid is added to the tank 13a. The six columns for each experiment indicate from the left: (1) pH value at which precipitation took place, (2) % precipitated Cu in relation to the total amount of Cu in the extract, (3) % precipitated Zn in relation to the total amount of Zn in the extract, (4) % precipitated Ca in relation to the total amount of Ca in the extract, (5) % precipitated PO₄ in relation to the total amount of PO₄ in the extract, (6) % precipitation of NH₄ in relation to the total amount of NH₄ in the extract.

**Table 8a: Precipitation of Cu, Zn, Ca ions, phosphate and nitrogen (fig. 13a))**

| **Experiment No.** | **1y** | **2y** |
|---|---|---|
| pH | 4,77 | 4,58 |
| Addition of oxalic acid (Yes/No) | N | Y |
| % prep. Cu | 99,9 | 99,9 |
| % prep. Zn | 99,3 | 99,3 |
| % prep. Ca | 7,7 | 99,7 |
| % prep. PO₄ | 64,3 | 11,3 |
| % prep. NH₄ | 1,5 | 2,1 |

The addition of oxalic acid leads beside the effect of the reduced amount of precipitated phosphor to another positive effect. A large amount of the undesirable Calcium is precipitated. When no oxalic acid is present nearly the total amount of Ca in solution will come with the stream to the next process step.

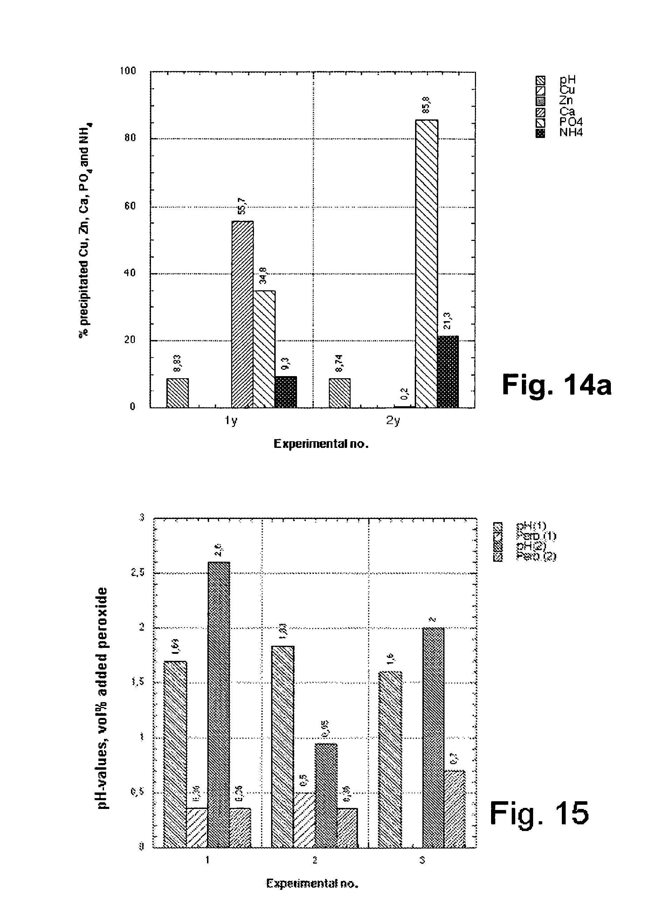

Figure14 shows the amounts of phosphate precipitated in tank 17 at different pH values. At this stage phosphate is predominantly and preferably precipitated with Mg but phosphate also forms insoluble compounds with e.g. Al, NH₄, Fe.

**Table 8: Precipitation of Cu, Zn sulfides and phosphates (fig. 14)**

| **Experiment no.** | **8** | **12** | **14** |
|---|---|---|---|
| % prep. Cu | 4,88 | 1,66 | 1,52 |
| % prep. Zn | 6,51 | n.d. | 1,67 |
| % prep. PO₄ | 42,6 | 87,2 | 98,1 |
| pH | 10 | 9,5 | 9,42 |

At this stage it is desirable that as much PO₄ as possible is precipitated and as little as possible of the heavy metals Cu and Zn are precipitated. In experiment 8 there was not added oxalic acid to the step preceding the precipitation of the heavy metals in tank 13a. The result is a reduced precipitation of phosphate at this step because the main part of the phosphate has already been precipitated with the heavy metals sulfides.

Results of additionally conducted experiments 1y and 2y are presented in figure 14a. In experiment 2y oxalic acid is added in the preceding process step. The six columns for each experiment indicate from the left: (1) pH value at which precipitation took place, (2) % precipitated Cu in relation to the total amount of Cu in the extract, (3) % precipitated Zn in relation to the total amount of Zn in the extract, (4) % precipitated Ca in relation to the total amount of Ca in the extract, (5) % precipitated PO₄ in relation to the total amount of PO₄ in the extract, (6) % precipitation of NH₄ in relation to the total amount of NH₄ in the extract.

**Table 9a: Precipitation of Cu, Zn, Ca ions, phosphate and nitrogen (fig. 14a)**

| **Experiment No.** | **1y** | **2y** |
|---|---|---|
| pH | 8,83 | 8,74 |
| Addition of oxalic acid (Yes/No) | N | Y |
| % prep. Cu | 0 | 0 |
| % prep. Zn | 0,0024 | 0,0020 |
| % prep. Ca | 55,7 | 0,2 |
| % prep. PO₄ | 34,8 | 85,8 |
| % prep. NH₄ | 9,3 | 21,3 |

With the application of oxalic acid a large amount of phosphate can be precipitated in this stage. The precipitated amount of the undesirable Ca is very small because the main part of the Ca has already been precipitated with the heavy metal sulphides.

Figure 15 shows the pH values and amount of added hydrogen peroxide for a first and a second extraction performed in tank 11 a and 11 b for the three experiments 1x, 2x and 3 (named as experiments 1-2 in fig. 1-9). The four columns for each experiment indicate from the left: (1) pH of first extraction, (2) vol% hydrogen peroxide added at the first extraction, (3) pH of the second extraction, (4) vol% hydrogen peroxide added at second extraction.

**Table 9: pH and added hydrogen peroxide (fig. 5, fig. 10, fig. 15)**

| **Experiment no.** | | **1x** | **2x** | **3** | **1** | **2** | **8** | **12** | **14** |
|---|---|---|---|---|---|---|---|---|---|
| 1. extraction | pH | 1,69 | 1,83 | 1,6 | 2,0 | 2,0 | 2,0 | 1,95 | 1,96 |
| | H₂O₂ | 0,36 | 0,5 | 0 | 0 | 0 | 0,25 | 0,25 | 0,36 |
| 2. extraction | pH | 2,6 | 0,95 | 2,0 | 1,0 | 1,01 | 1,94 | 1,88 | 0,96 |
| | H₂O₂ | 0,36 | 0,36 | 0,7 | 0,36 | 0 | 0,72 | 0,72 | 0 |
| Addition of oxalic acid | Yes / No | N | N | N | Y | Y | N | Y | Y |

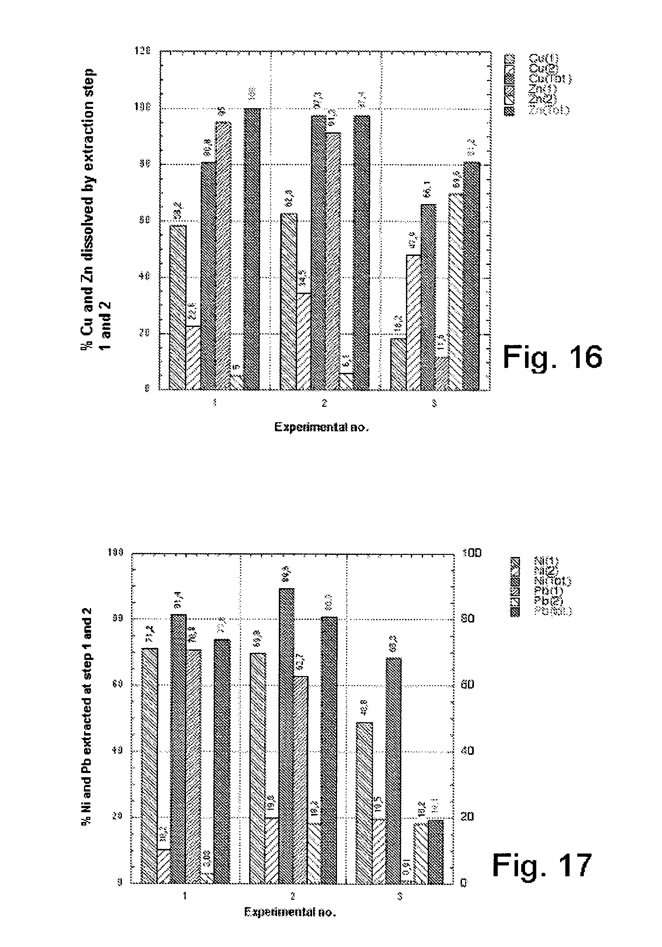

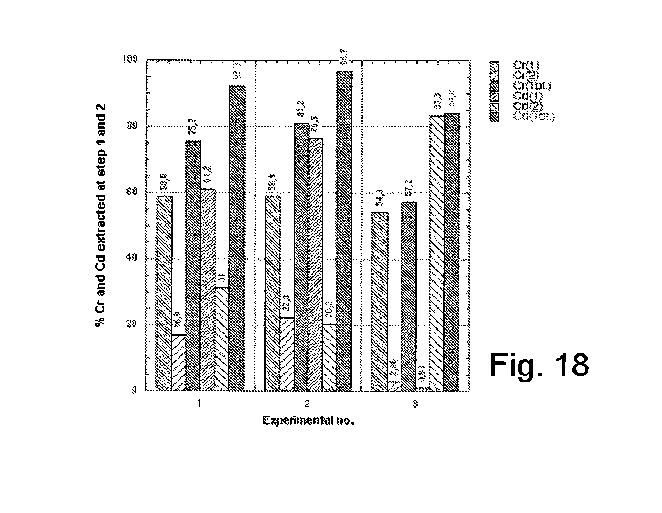

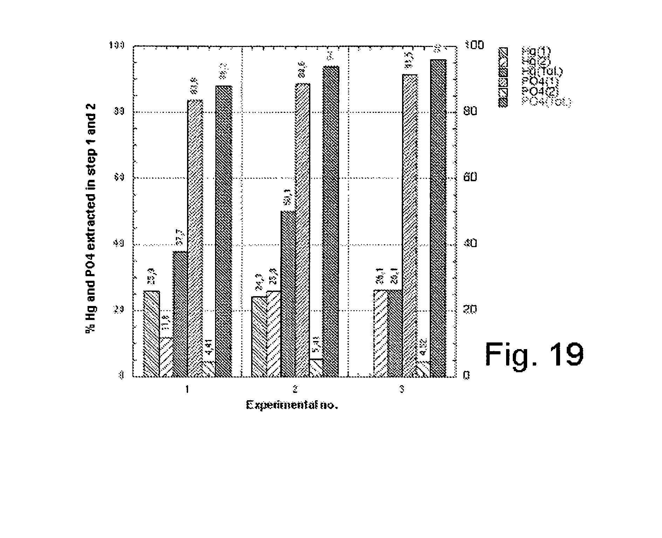

Fig. 16-19 shows the release of the heavy metals Cu, Zn, Ni, Pb, Cr, Cd and Hg and of phosphate to the liquid phase during respectively the first and the second extraction.

**Table 10: Dissolved heavy metals and phosphate (fig. 16-19) incl. results from table 1 and 5.**

| **Experiment no.** | **1x** | **2x** | **3** | **1** | **2** | **8** | **12** | **14** |
|---|---|---|---|---|---|---|---|---|
| Total release of Cu (%) | 80,8 | **97,3** | 66,1 | 61,9 | 7,62 | 82,5 | 91,4 | 94,0 |
| Total release of Zn (%) | 100,0 | **97,4** | 81,2 | 89,8 | 59,7 | 96,8 | 99,7 | 99,3 |
| Total release of Ni (%) | 81,4 | 89,6 | 68,3 | | | | | |
| Total release of Pb (%) | 73,8 | 80,9 | 19,1 | | | | | |
| Total release of Cr (%) | 75,7 | 81,2 | 57,2 | | | | | |
| Total release of Cd (%) | 92,3 | 96,7 | 84,2 | | | | | |
| Total release of Hg (%) | 37,7 | 50,1 | **26,1** | | | | | |
| Total release of P04 (%) | **88,2** | 94,0 | 96,0 | | | | | |

The experiments show that the adding of peroxide has a significant importance when it comes to releasing heavy metals during the extraction steps, preferably peroxide should be added to the first extraction step. The release of phosphate during extraction relates more to the pH; preferably pH should be in a range from 4.5 to 5.5.

## Claims

1. Method for recovering phosphate from a feed mixture comprising a liquid phase and a solid material in which mixture metals are present which method comprises the following steps:
a. assuring a pH < 3.5 and adding an oxidation agent thereby dissolving at least a part of the solid material and increasing the metal and phosphate content in the liquid phase;
b. separating remaining solid from the liquid phase;
after having separated solids from the liquid phase in step b), components having affinity for forming insoluble compounds with PO₄ at pH > 3 are removed from the liquid phase before step c) and
c. then pH is increased to > 3 in the liquid phase and an agent for precipitating metal ions is added;
d. separating the precipitated metal compounds from the liquid phase;
e. adding alkaline (MgO, NaOH etc.) and increasing pH to > 8 in the liquid phase;
f. separating the precipitated phosphate and nitrogen from the liquid phase, **characterised in that** a precipitation forming agent in the form of an organic acid or a mixture of organic acids with one or more carboxylic groups is/are added to the liquid phase after step b) and before step c).

2. Method for recovering phosphate according to claim 1 wherein the precipitating agent used in step c) is H₂S, Na₂S, R₂SR₁ or thiols (RSH).

3. Method for recovering phosphate according to claim 1 or 2 wherein the residue -NH₄-/NH₃ is removed from the feed mixture after step f.

4. Method for recovering phosphate according to claim 1, 2 or 3 wherein NH₄-/NH₃ is removed from the feed mixture by
(i) raising pH until pH > 8 and heating the waste to a temperature ≥ 50°C and then
(ii) separating NH₃-gas from a process fluid.

5. Method for recovering phosphate according to claim 4, wherein pH in step (i) is raised by adding alkaline e.g. NaOH.

6. Method for recovering phosphate according to any of the preceding claims, wherein the feed mixture is provided by fermenting organic waste.

7. Method for recovering phosphate according to any of the preceding claims, wherein the agent for precipitating metal ions in step c) comprises biogas produced by fermenting organic waste.

8. Method for recovering phosphate according to any of the preceding claims, wherein the agent for precipitating metal ions in step c) comprises a sulfide containing gas.

9. Method for recovering phosphate according to any of the preceding claims, wherein step a) comprises two extraction steps each step having a pH < 3.5.

10. Method for recovering phosphate according to claim 9, where the pH-value in each extraction step is 0.5 < pH < 3.5, and where at least 0.2 vol% peroxide, normally 0.2 - 2.0 vol% peroxide is added to at least the first extraction step.

11. Method for recovering phosphate according to any of the preceding claims, wherein the organic acid is oxalic acid or citric acid or a mixture of oxalic and citric acid.

12. Method for recovering phosphate according to any preceding claim, wherein a flocculant is added before any of the separation steps b, d, or f.

## Patentansprüche

1. Verfahren zum Gewinnen von Phosphat aus einem Beschickungsgemisch, das eine flüssige Phase und festes Material aufweist, in dem ein Gemisch von Metallen vorliegt, wobei das Verfahren die folgenden Schritte aufweist:
a.) Sicherstellen eines pH-Wertes von pH < 3,5 und Zugeben eines Oxidationsmittels, um zumindest einen Teil des festen Materials zu lösen und den Metall- und Phosphatgehalt in der flüssigen Phase zu erhöhen;
b.) Abtrennen des verbleibenden Feststoffs von der flüssigen Phase,
nachdem die Feststoffe im Schritt b.) von der flüssigen Phase abgetrennt worden sind, werden vor dem Schritt c.) Bestandteile mit der Affinität zur Bildung unlöslicher Verbindungen mit PO₄ bei einem pH-Wert von pH > 3 aus der flüssigen Phase entfernt, und
c.) anschließendes Erhöhen des pH-Wertes in der flüssigen Phase auf pH > 3 und Zugeben eines Mittels zum Fällen von Metallionen;
d.) Abtrennen der gefällten Metallverbindungen von der flüssigen Phase;
e.) Zugeben einer alkalischen Verbindung (MgO, NaOH usw.) und Erhöhen des pH-Wertes in der flüssigen Phase auf pH > 8;
f.) Abtrennen des gefällten Phosphats und Stickstoffs von der flüssigen Phase;
**dadurch gekennzeichnet,**
**daß** nach dem Schritt b.) und vor dem Schritt c.) der flüssigen Phase ein Fällungsmittel in Form einer organischen Säure oder eines Gemischs von organischen Säuren mit einer oder mehreren Carboxylgruppen zugesetzt wird.

2. Verfahren zum Entfernen von Phosphat nach Anspruch 1,
wobei das im Schritt c.) verwendete Fällungsmittel H₂S, Na₂S, R₂SR₁ oder Thiole (RSH) sind.

3. Verfahren zum Gewinnen von Phosphat nach Anspruch 1 oder 2,
wobei der Rückstand, NH₄-/NH₃ nach dem Schritt f.) aus dem Beschickungsgemisch entfernt wird.

4. Verfahren zum Gewinnen von Phosphat nach Anspruch 1, 2 oder 3,
wobei NH₄-/NH₃ aus dem Beschickungsgemisch entfernt wird durch:
(i) Erhöhen des pH-Wertes bis auf pH > 8 und Erwärmen des Abfalls auf eine Temperatur von ≥ 50 °C und danach
(ii) Abtrennen von NH₃-Gas von der Prozeßflüssigkeit.

5. Verfahren zum Gewinnen von Phosphat nach Anspruch 4,
wobei der pH-Wert im Schritt (i) durch die Zugabe einer alkalischen Verbindung, z.B. NaOH, erhöht wird.

6. Verfahren zum Gewinnen von Phosphat nach einem der vorstehenden Ansprüche,
wobei das Beschickungsgemisch durch Fermentieren von organischem Abfall bereitgestellt wird.

7. Verfahren zum Gewinnen von Phosphat nach einem der vorstehenden Ansprüche,
wobei das Mittel zum Fällen von Metallionen im Schritt c.) Biogas aufweist, das durch Fermentieren von organischem Abfall erzeugt wird.

8. Verfahren zum Gewinnen von Phosphat nach einem der vorstehenden Ansprüche,
wobei das Mittel zum Fällen von Metallionen im Schritt c.) Sulfid enthaltendes Gas aufweist.

9. Verfahren zum Gewinnen von Phosphat nach einem der vorstehenden Ansprüche,
wobei der Schritt a.) zwei Extraktionsschritte aufweist, wobei jeder Schritt bei einem pH-Wert von pH < 3,5 erfolgt.

10. Verfahren zum Gewinnen von Phosphat nach Anspruch 9,
wobei der pH-Wert in jedem Extraktionsschritt 0,5 < pH < 3,5 beträgt und wobei zumindest 0,2 Vol.-% Peroxid, normalerweise 0,2 bis 2,0 Vol.-% Peroxid, zumindest dem ersten Extraktionsschritt zugesetzt werden.

11. Verfahren zum Gewinnen von Phosphat nach einem der vorstehenden Ansprüche,
wobei die organische Säure Oxalsäure oder Citronensäure oder ein Gemisch von Oxalsäure und Citronensäure ist.

12. Verfahren zum Gewinnen von Phosphat nach einem der vorstehenden Ansprüche,
wobei vor irgendeinem der Trennschritte b.), d,) oder f.) ein Flockungsmittel zugesetzt wird.

## Revendications

1. Procédé de récupération de phosphate à partir d'un mélange d'alimentation comprenant une phase liquide et une matière solide dans lequel mélange des métaux sont présents, lequel procédé comprend les étapes suivantes consistant :
a. à assurer un pH < 3,5 et à ajouter un agent d'oxydation dissolvant par là au moins une partie de la matière solide et augmentant la teneur en métal et en phosphate dans la phase liquide ;
b. à séparer la matière solide résiduelle de la phase liquide ; après avoir séparé les matières solides de la phase liquide dans l'étape b), les constituants présentant une affinité à former des composés insolubles avec PO₄ à pH > 3 sont éliminés de la phase liquide avant l'étape c) et
c. à augmenter ensuite le pH à > 3 dans la phase liquide et à ajouter un agent pour la précipitation des ions métalliques;
d. à séparer les composés de métaux précipités de la phase liquide ;
e. à ajouter des composés alcalins (MgO, NaOH etc.) et à augmenter le pH jusqu'à > 8 dans la phase liquide ;
f. à séparer le phosphate précipité et l'azote de la phase liquide,
**caractérisé en ce qu'**un agent formant une précipitation dans la forme d'un acide organique ou d'un mélange d'acides organiques avec un ou plusieurs groupes carboxyliques est/sont ajoutés à la phase liquide après l'étape b) et avant l'étape c).

2. Procédé de récupération de phosphate selon la revendication 1, dans lequel l'agent pour la précipitation utilisé dans l'étape c) est H₂S, Na₂S, R₂SR₁ ou des thiols (RSH).

3. Procédé de récupération de phosphate selon la revendication 1 ou 2, dans lequel le résidu NH₄-/NH₃ est éliminé du mélange d'alimentation après l'étape f.

4. Procédé de récupération de phosphate selon la revendication 1, 2 ou 3, dans lequel NH₄-/NH₃ est éliminé du mélange d'alimentation par
(i) augmentation du pH jusqu'à pH > 8 et chauffage des déchets à une température ≥50°C et ensuite
(ii) séparation de NH₃-gaz d'un fluide de procédé.

5. Procédé de récupération de phosphate selon la revendication 4, dans lequel le pH dans l'étape (i) est augmenté en ajoutant un composé alcalin par exemple NaOH.

6. Procédé de récupération de phosphate selon l'une quelconque des revendications précédentes, dans lequel le mélange d'alimentation est fourni par fermentation de déchets organiques.

7. Procédé de récupération de phosphate selon l'une quelconque des revendications précédentes, dans lequel l'agent pour la précipitation d'ions métalliques dans l'étape c) comprend du biogaz produit par fermentation de déchets organiques.

8. Procédé de récupération de phosphate selon l'une quelconque des revendications précédentes, dans lequel l'agent pour la précipitation d'ions métalliques dans l'étape c) comprend un gaz contenant un sulfure.

9. Procédé de récupération de phosphate selon l'une quelconque des revendications précédentes, dans lequel l'étape a) comprend deux étapes d'extraction, chaque étape ayant un pH < 3,5.

10. Procédé de récupération de phosphate selon la revendication 9, dans lequel la valeur de pH dans chaque étape d'extraction est 0,5 < pH < 3,5, et dans lequel au moins 0,2 % en volume de peroxyde, normalement 0,2 - 2,0 % en volume de peroxyde, sont ajoutés au moins dans la première étape d'extraction.

11. Procédé de récupération de phosphate selon l'une quelconque des revendications précédentes, dans lequel l'acide organique est l'acide oxalique ou l'acide citrique ou un mélange d'acides oxalique et citrique.

12. Procédé de récupération de phosphate selon l'une quelconque des revendications précédentes, dans lequel un floculant est ajouté avant l'une des étapes de séparation b, d ou f.
